# EUROPEAN PATENT SPECIFICATION

(11) **EP 1 680 746 B1**
(45) Date of publication and mention of the grant of the patent: **25.03.2009**
(21) Application number: 04795208.0
(22) Date of filing: 14.10.2004
(51) Int. Cl.: G06F 15/16

(54) **FILE TRANSFER PROTOCOL FOR MOBILE COMPUTER**
DATEITRANSFERPROTOKOLL FÜR EINEN MOBILEN COMPUTER
PROTOCOLE DE TRANSFERT DE FICHIERS POUR ORDINATEUR MOBILE

(30) Priority: 07.11.2003 US 518285 P; 12.10.2004 US 962862
(43) Date of publication of application: 19.07.2006
(73) Proprietor: SONY ELECTRONICS, INC., Park Ridge, New Jersey 07656 (US)
(72) Inventor: ZHENG, Jianyu, Roy, San Diego, CA 92128 (US)
(74) Representative: DeVile, Jonathan Mark
(86) International application number: PCT/US2004/034014
(87) International publication number: WO 2005/048025

(56) References cited:
- WO-A-02/19653
- US-A1- 2002 078 154
- US-A1- 2003 018 887
- US-A1- 2003 087 629
- US-B1- 6 292 657
- US-B1- 6 594 762

## Description

### Related Applications

This application claims priority from U.S. provisional application no. 60/518,285 filed on November 7, 2003.

### I. Field of the Invention

The present invention relates generally to computer file sharing and transfers using mobile computers.

### II. Background

Computer files can be transferred between computers using one of a variety of protocols, most of which are intended for use with personal computer operating systems (OS). For example, the generic File Transfer Protocol (FTP) for PCs, which essentially is a top level application program that relies on processing and communication layers in a PC OS, enables files to be transferred with security control to do such things as navigate, create, and delete directories, and to copy and delete files, and so on. A more widely used protocol is the server message block (SMB) protocol, which facilitates even more operations including sharing files, serial ports, and printers. SMB can also provide for two levels of security.

Yet a third protocol for transferring files between devices is Bluetooth, which is intended for wireless environments and which essentially offers the same capabilities as FTP. All of these protocols assume use with a PC OS and require both ends of the transmission (client and server, for instance) to possess communication protocol stacks that match each other.

As understood herein, the above protocols are designed with the PC OS in mind, but that other OS such as Palm OS are used in smaller wireless devices such as wireless telephones and personal digital assistants (PDA). As further understood herein, the Palm OS does not have all of the PC OS features that conventional file sharing protocols assume. For example, as recognized herein, the Palm OS does not have a conventional file system in its internal memory, which is relatively small.

Rather, files are stored as databases with header information. Further, network communication support in Pahn OS is confined to the transmission control protocol/Internet protocol (TCP/IP) layer. With the above observations in mind, the present invention has been provided.

International patent application WO -A- 02/19653 discloses a system for managing peer-to-peer file transfers. The system includes a central server which monitors all file transfer requests and will dictate the route via which the file transfer will take place.

US patent application US -A- 2002/0078154 discloses a scheme which provides a WAP (Wireless Application Protocol) chat server which allows users of WAP devices to chat in real time.

### SUMMARY OF THE INVENTION

Various aspects and features of the invention are defined in the appended claims.

A method for communicating using a device having a Palm operating system (OS) includes preferentially using server message block (SMB) to communicate with a node, and if use of SMB to communicate with the node is not possible, using file transfer protocol (FTP). If use of FTP is not possible to communicate with the node, Bluetooth is used.

In illustrative embodiments, if a protocol for communication between the device and a communication node has not been identified, it is determined whether the node can communicate using a SMB dialect available to the device, and if so, SMB is selected as the communication protocol. If the node cannot communicate using a SMB dialect available to the device, the node is queried with a FTP message and if an appropriate response is received, FTP is selected as the communication protocol. On the other hand, if an appropriate response is not received, identifications of devices are attempted to be gathered using Bluetooth, and if an identification matches the identification of the node, Bluetooth is selected as the communication protocol.

If SMB or Bluetooth is selected as the protocol, a user name can be automatically set to a default name. In contrast, if FTP or Bluetooth is selected as the protocol, file sharing between the device and node that entails a read or write may be executed by temporarily copying a file to an internal Palm OS memory of the device, performing the read or write on the file, and then copying the file back to the node to overwrite a previous version of the file at the node. For file transfer to or from the internal memory of the device, the method can include transferring a file that is not in Palm OS format between the internal memory and the node by wrapping the file in a Palm OS stream in the internal memory and performing a read or a write on the file. On the other hand, for file transfer to or from an expansion memory of the device, the method can include transferring a file between the expansion memory and the node by byte-to-byte copying of the file using a file allocation table (FAT) of the expansion memory. In this case, the file may be transferred through the internal memory.

In another embodiment, a system includes a processor communicating using a protocol stack. The stack can include an application layer having at least two application layer protocols selected from the group including Bluetooth, file transfer protocol (FTP), and server message block (SMB). A protocol layer is on top of the application layer for selecting which application layer protocol to use to communicate with a node.

In still another embodiment, a Palm OS device has an internal memory, an expansion memory, and a Palm operating system (OS) accessing the memories. Means are provided to the Palm OS for determining whether the node can communicate using a SMB dialect available to the device, and if so, selecting SMB as the communication protocol. Means are also provided to the Palm OS for, if the node cannot communicate using a SMB dialect available to the device, querying the node with a FTP message, and if an appropriate response is received, selecting FTP as the communication protocol. Still further, means are provided for, if an appropriate response is not received, gathering identifications of devices using Bluetooth. If an identification matches an identification of the node, Bluetooth is selected.

The details of the present invention, both as to its structure and operation, can best be understood in reference to the accompanying drawings, in which like reference numerals refer to like parts, and in which:

### BRIEF DESCRIPTION OF THE DRAWINGS

Figure 1 is a block diagram of the present mobile file transfer protocol (mFTP), shown in one intended environment;
Figure 2 is a schematic representation of an exemplary protocol stack of the present mFTP;
Figure 3 is a flow chart of the logic of the present mFTP in selecting the protocol;
Figure 4 is a flow chart showing the file sharing logic; and
Figure 5 is a flow chart showing the file transfer logic.

### DETAILED DESCRIPTION OF THE PREFERRED EMBODIMENT

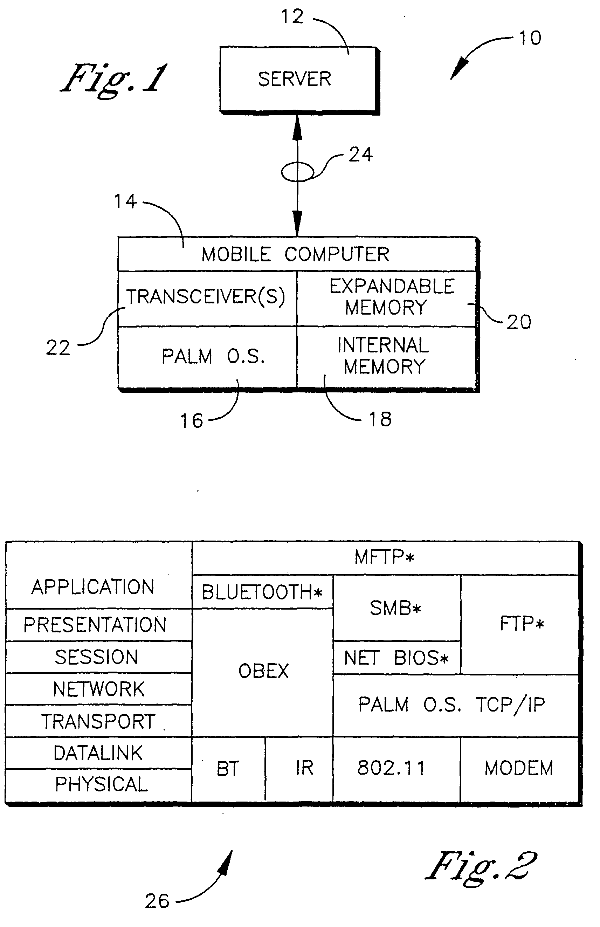

Referring initially to Figure 1, a system is shown, generally designated 10, that includes one or more servers 12 communicating with one or more mobile computing devices 14. The mobile computing device 14 may be a wireless telephone, personal digital assistant (PDA), or other device that uses a non-personal computer (PC) operating system (OS), and in the embodiment shown that uses a Palm OS 16. The OS 16 can access an internal memory 18 and an expansion memory 20 that may be implemented by an expansion memory card. The OS 16 also accesses at least two transceivers 22 for purposes to be shortly disclosed for communicating with the server 12 over a wired or wireless link 24. The transceivers 22 can include modems, 802.11 devices, and Bluetooth infrared (IR) and/or radiofrequency (rf) transceivers.

Figure 2 shows one embodiment of the protocol stack 26 of the present invention, which need not be exactly paired in the server 12. The stack 26 can include an application layer that includes a top-most mFTP layer which functions as described herein over a Bluetooth FTP layer, a SMB layer, and a FTP layer. The Bluetooth FTP layer is on top of a conventional Object Exchange protocol (OBEX) presentation, session, network, and transport layer. Under the OBEX layer in turn can be conventional Bluetooth (radiofrequency) and infrared data link and physical layers.

On the other hand, as shown in Figure 2 the data link and physical layer for the SMB layer is a conventional IEEE 802.11 layer, whereas the data link and physical layer for the FTP layer is a conventional modem. A conventional Palm OS TCP/IP stack serves as the network and transport layer for both the SMB layer and FTP layer. However, unlike a conventional Palm OS architecture, in accordance with the present invention a net basic input/output system (NetBIOS) layer is provided as a session layer between the SMB layer and Palm OS TCP/IP layer. The logic below is implemented by the cooperation between the mFTP layer, Bluetooth FTP layer, SMB layer with NetBIOS layer, and FTP layer.

It is to be understood that the processor of the computer 14 accesses the OS 16 to undertake the logic shown and discussed below, which may be executed by a processor as a series of computer-executable instructions.

The instructions may be contained on a data storage device with a computer readable medium, such as a computer diskette having a computer usable medium with computer readable code elements stored thereon. Or, the instructions may be stored on a DASD array, magnetic tape, conventional hard disk drive, electronic read-only memory, optical storage device, or other appropriate data storage device, such as the internal memory 18. In an illustrative embodiment of the invention, the computer-executable instructions may be lines of compiled C⁺⁺ compatible code or JAVA^{®}.

Indeed, the flow charts herein illustrate the structure of the logic of the present invention as embodied in computer program software. Those skilled in the art will appreciate that the flow charts illustrate the structures of computer program code elements including logic circuits on an integrated circuit, that function according to this invention. Manifestly, the invention is practiced in its essential embodiment by a machine component that renders the program code elements in a form that instructs a digital processing apparatus (that is, a computer) to perform a sequence of function acts corresponding to those shown.

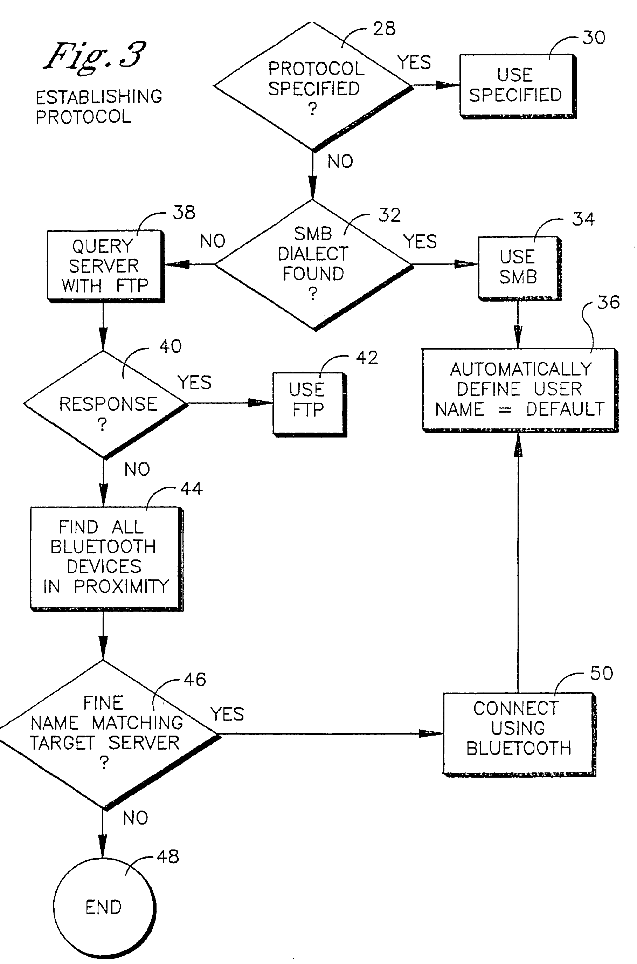

Figure 3 illustrates the logic of the present mFTP. It is to be understood that Figure 3 assumes that a correct user name and password have been input and accepted.

Commencing at decision diamond 28, it is determined whether the desired underlying protocol (SMB, Bluetooth, or FTP) has been specified, e.g., by the user. If it has, the logic flows to block 30 to use the specified protocol. Otherwise, the logic flows to decision diamond 32 to determine whether a suitable SMB dialect can be negotiated with the server. If so, SMB is selected as the protocol at block 34, and the user name is automatically set to the default name at block 36. In contrast, if no SMB dialect can be agreed upon, the logic flows to block 38 to query the server using FTP, and then at decision diamond 40 it is determined whether a suitable response has been received. If so, the logic selects FTP as the protocol at block 42. Otherwise, all Bluetooth devices in the proximity of the device are located at block 44 using Bluetooth principles known in the art.

At decision diamond 46, it is determined whether any device name that is returned as a result of the previous locating step matches the name of the desired file server with which connection is to be made. If not the logic ends at state 48, but otherwise the logic connects to the server using Bluetooth at block 50, and then automatically sets the user name to default at block 36.

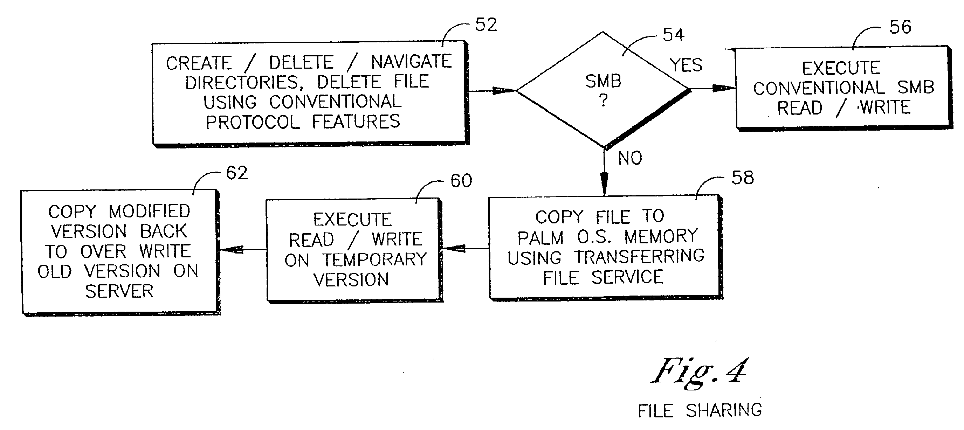

Figure 4 shows the logic for sharing files between the device and server. Block 52 simply indicates that directories are created, deleted, and navigated and files deleted using the conventional features of the underlying protocol selected as a result of Figure 3. Decision diamond 54 indicates that if SMB was selected in Figure 3, reading and writing files may be done conventionally at block 56. However, if FTP or Bluetooth is the selected protocol, the logic proceeds to block 58 to temporarily copy the file to be shared to the local internal Palm OS memory of the device using the underlying file transfer service. A read (or write, as appropriate) is then executed on the temporary version at block 60, and the result is copied back to the appropriate location in the server at block 62 to overwrite the version on the remote server. Running a Palm OS application on the device from the remote server is executed using the read or write file function described above.

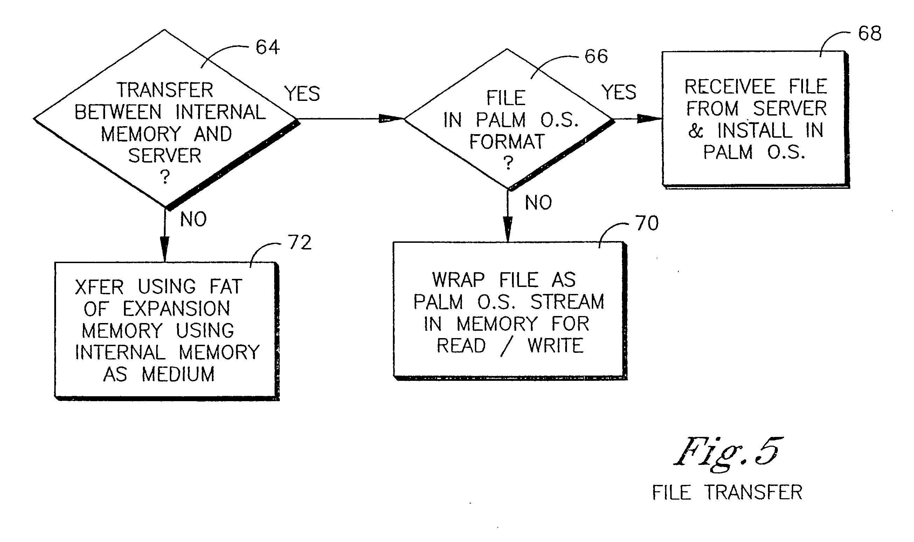

Figure 5 shows the file transfer logic. Decision diamond 64 represents a branch in the logic depending on whether the file is to be transferred between the server 12 and the local internal Palm OS memory 18 or between the server and the expansion Palm OS memory 20. In the former case, the logic flows to decision diamond 66 to determine whether the file in question is in Palm OS format, and if it is the logic moves to block 68 to receive the file from the server (for a read) or transfer the file to the server (for a write) using Palm OS principles known in the art. If the file is not in OS format, however, the logic proceeds to block 70 to wrap the file in a Palm OS stream in the internal memory of the Palm OS so that the file can be read or written but not necessarily be directly accessible to an end user of the device.

If the file is to be transferred to or from the expansion memory 20, which is expected to employ a conventional file allocation table (FAT), the logic moves from decision diamond 64 to block 72 to transfer the file using the FAT in a byte-to-byte copy, using the Palm OS native internal memory as a transmission medium.

While the particular FILE TRANSFER PROTOCOL FOR MOBILE COMPUTER as herein shown and described in detail is fully capable of attaining the above-described objects of the invention, it is to be understood that it is the presently preferred embodiment of the present invention and is thus representative of the subject matter which is broadly contemplated by the present invention, that the scope of the present invention fully encompasses other embodiments which may become obvious to those skilled in the art, and that the scope of the present invention is accordingly to be limited by nothing other than the appended claims, in which reference to an element in the singular is not intended to mean "one and only one" unless explicitly so stated, but rather "one or more".

## Claims

1. A method for communicating using a device (14) having a Palm operating system (16), comprising using the server message block protocol to communicate with a node (12), and if use of the server message block protocol to communicate with the node (12) is not possible, using the file transfer protocol, and if use of the file transfer protocol is not possible to communicate with the node (12), using the Bluetooth protocol, wherein if the file transfer protocol or the Bluetooth protocol is selected as a communication protocol, file sharing between the device (14) and the node (12) that entails a read or write is executed by temporarily copying a file from the node (12) to an internal Palm operating system memory of the device (14), performing the read or write on the file, and then copying the file back to the node (12) to overwrite a previous version of the file at the node (12).

2. The method of Claim 1, wherein if the protocol for communication between the device (14) and a communication node (12) has not been identified, determining whether the node (12) can communicate using a server message block dialect available to the device (14), and if so, selecting the server message block protocol as the communication protocol.

3. The method of Claim 2, wherein if the node (12) cannot communicate using a server message block dialect available to the device (14), the node (12) is queried with a file transfer protocol message and if an appropriate response is received, the file transfer protocol is selected as the communication protocol.

4. The method of Claim 3, wherein if an appropriate response is not received, identifications of the device (14) are attempted to be gathered using the Bluetooth protocol, and if an identification matches the identification of the node (12), the Bluetooth protocol is selected as the communication protocol.

5. The method of Claim 1, wherein if the server message block protocol or the Bluetooth protocol is selected as the communication protocol, a user name is automatically set to a default name.

6. The method of Claim 1, comprising transferring at least one file not in a Palm operating system format between an internal Palm operating system memory (18) of the device (14) and the node (12) by wrapping the file in a Palm operating system stream in the internal memory (18) and performing at least one of: a read, and a write, on the file.

7. The method of Claim 1, comprising transferring at least one file between an expansion Palm operating system memory (20) of the device (14) and the node (12) by byte-to-byte copying of the file using a file allocation table of the expansion memory (20), the file being transferred through an internal Palm operating system memory (18) of the device (14).

8. A Palm operating system device (14), comprising:
at least one internal memory (18);
at least one expansion memory (20);
at least one Palm operating system (16) accessing the memories (18,20);
means for determining whether a node (12) can communicate using a server message block dialect available to the device (14);
means for selecting the server message block protocol as a communication protocol if the server message block protocol between the device (14) and the node (12) is possible;
means for, if the node (12) cannot communicate using the server message block protocol available to the device (14), querying the node (12) with a file transfer protocol message;
means for, if an appropriate response is received, selecting the file transfer protocol as the communication protocol;
means for, if an appropriate response is not received, gathering identifications of device (14) using the Bluetooth protocol;
means for, if an identification matches an identification of the node (12), selecting the Bluetootln protocol as the communication protocol; and
means for, if the file transfer protocol or the Bluetooth protocol is selected as the communication protocol, file sharing between the device (14) and node (12) that entails a read or write is executed by temporarily copying a file from the node (12) to an internal Palm operating system memory of the device (14), performing the read or write on the file, and then copying the file back to the node (12) to overwrite a previous version of the file at the node (12).

## Patentansprüche

1. Kommunikationsverfahren unter Verwendung einer Einrichtung (14), welche ein Palm-Betriebssystem (16) hat, welches umfasst: Verwenden des Servermitteilungs-Blockprotokolls, um mit einem Knoten (12) zu kommunizieren, und, wenn die Verwendung des Servermitteilungs-Blockprotokolls, um mit dem Knoten (12) zu kommunizieren, nicht möglich ist, Verwenden des Dateiübertragungsprotokolls, und, wenn das Verwenden des Dateiübertragungsprotokolls nicht möglich ist, mit dem Knoten (12) zu kommunizieren, Verwenden des Bluetooth-Protokolls, wobei, wenn das Dateiübertragungsprotokoll oder das Bluetooth-Protokoll als Kommunikationsprotokoll ausgewählt wird, gemeinsames Nutzen der Datei zwischen der Einrichtung (14) und dem Knoten (12), welcher ein Lesen oder Schreiben verursacht, durch vorübergehendes Kopieren einer Datei vom Knoten (12) zu einem internen Palm-Betriebssystemspeicher der Einrichtung (14), Durchführen des Lesens oder Schreibens auf die Datei, und darin Kopieren der Datei zurück zum Knoten (12), um eine vorherige Version der Datei im Knoten (12) zu überschreiben, ausgeführt wird.

2. Verfahren nach Anspruch 1, wobei, wenn das Protokoll zur Kommunikation zwischen der Einrichtung (14) und einem Kommunikationsknoten (12) nicht identifiziert wurde, Bestimmen, ob der Knoten (12) kommunizieren kann, unter Verwendung eines Servermitteilungs-Blockdialekts, der für die Einrichtung (14) verfügbar ist, und, wenn dies so ist, Auswählen des Servermitteilungs-Blockprotokolls als Kommunikationsprotokoll.

3. Verfahren nach Anspruch 2, wobei, wenn der Knoten (12) nicht unter Verwendung eines Servermitteilungs-Blockdialekts kommunizieren kann, der für die Einrichtung (14) verfügbar ist, der Knoten (12) mit einer Dateiübertragungs-Protokollmitteilung befragt wird, und, wenn eine geeignete Antwort empfangen wird, das Dateiübertragungsprotokoll als Kommunikationsprotokoll ausgewählt wird.

4. Verfahren nach Anspruch 3, wobei, wenn eine geeignete Antwort nicht empfangen wird, versucht wird, Identifikationen der Einrichtungen (14) unter Verwendung des Bluetooth-Protokolls aufzusammeln, und, wenn eine Identifikation zur Identifikation des Knotens (12) passt, das Bluetooth-Protokoll als Kommunikationsprotokoll ausgewählt wird:

5. Verfahren nach Anspruch 1, wobei, wenn das Servermitteilungs-Blockprotokoll oder das Bluetooth-Protokoll als Kommunikationsprotokoll ausgewählt wird, ein Benutzername automatisch als Voreinstellungsname festgelegt wird.

6. Verfahren nach Anspruch 1, welches das Übertragen von zumindest einer Datei, welche nicht in einem Palm-Betriebssystemformat ist, zwischen einem internen Palm-Betriebssystem-Speicher (18) der Einrichtung (14) und dem Knoten (12) umfasst, indem die Datei in einen Palm-Betriebssystemstrom im internen Speicher (18) umhüllt wird und zumindest eines davon durchgeführt wird: Lesen und Schreiben auf die Datei.

7. Verfahren nach Anspruch 1, welches das Übertragen von zumindest einer Datei zwischen einem Expansions-Palm-Betriebssystem-Speicher (20) der Einrichtung (14) und dem Knoten (12) durch byteweises Kopieren der Datei unter Verwendung einer Dateizuordnungstabelle des Expansionsspeichers (20) umfasst, wobei die Datei über einen internen Palm-Betriebssystem-Speicher (18) der Einrichtung (14) übertragen wird.

8. Palm-Betriebssystem-Einrichtung (14), welche umfasst:
zumindest einen internen Speicher (18);
zumindest einen Expansionsspeicher (20);
zumindest ein Palm-Betriebssystem (16), welches auf die Speicher (18, 20) zugreift;
eine Einrichtung zum Bestimmen, ob ein Knoten (12) kommunizieren kann, unter Verwendung eines Servermitteilungs-Blockdialekts, der für die Einrichtung (14) verfügbar ist;
eine Einrichtung zum Auswählen des Servermitteilungs-Blockprotokolls als Kommunikationsprotokoll, wenn das Serverinitteilungs-Blockprotokoll zwischen der Einrichtung (14) und dem Knoten (12) möglich ist;
eine Einrichtung zum, wenn der Knoten (12) nicht unter Verwendung des Servermitteilungs-Blockprotokolls, welches für die Einrichtung (14) verfügbar ist, kommunizieren kann, Abfragen des Knotens (12) mit einer Dateiübertragungs-Protokollmitteilung;
eine Einrichtung zum, wenn eine geeignete Antwort empfangen wird, Auswählen des Dateiübertragungsprotokolls als Kommunikationsprotokoll;
eine Einrichtung zum, wenn eine geeignete Antwort nicht empfangen wird, Sammeln von Identifikationen der Einrichtung (14) unter Verwendung des Bluetooth-Protokolls;
eine Einrichtung zum, wenn eine Identifikation zu einer Identifikation des Knotens (12) passt, Auswählen des Bluetooth-Protokolls als Kommunikationsprotokoll; und
eine Einrichtung zum, wenn das Dateiübertragungsprotokoll oder das Bluetooth-Protokoll als Kommunikationsprotokoll ausgewählt wird, gemeinsamen Nutzen der Datei zwischen der Einrichtung (14) und dem Knoten (12), der ein Lesen oder Schreiben verursacht, durch vorübergehendes Kopieren einer Datei vom Knoten (12) zu einem internen Palm-Betriebssystem-Speicher der Einrichtung (14), Durchführen des Lesens oder Schreibens auf die Datei, und dann Kopieren der Datei zurück zum Knoten (12), um eine vorherige Version der Datei im Knoten (12) zu überschreiben, ausgeführt wird.

## Revendications

1. Procédés de communication utilisant un dispositif (14) possédant un système d'exploitation Palm (16), comportant l'utilisation d'un protocole de bloc de message de serveur pour communiquer avec un noeud (12), et si l'utilisation du protocole de bloc de message de serveur pour communiquer avec le noeud (12) est pas possible, l'utilisation d'un protocole de transfert de fichiers, et si l'utilisation du protocole de transfert de fichiers n'est pas possible pour communiquer avec le noeud (12), l'utilisation du protocole Bluetooth, dans lequel si le protocole de fichiers de transfert ou le protocole Bluetooth est sélectionné en tant que protocole de communication, le partage de fichiers entre le dispositif (14) et le noeud (12) qui entraîne une lecture ou une écriture est exécuté en copiant temporairement un fichier depuis le noeud (12) vers une mémoire de système d'exploitation Palm interne du dispositif (14), en effectuant la lecture ou l'écriture sur le fichier, et ensuite en recopiant le fichier vers le noeud (12) pour écraser une version précédente du fichier dans le noeud (12).

2. Procédé selon la revendication 1, dans lequel si le protocole pour une communication entre le dispositif (14) et un noeud de communication (12) n'a pas été identifié, déterminer si le noeud (12) peut communiquer en utilisant un dialecte de bloc de message de serveur disponible dans le dispositif (14), et ainsi, sélectionner le protocole de bloc de message de serveur en tant que protocole de communication.

3. Procédé selon la revendication 2, dans lequel, si le noeud (12) ne peut pas communiquer en utilisant un dialecte de bloc de message de serveur disponible dans le dispositif (14), le noeud (12) est interrogé grâce à un message de protocole de transfert de fichiers et si une réponse appropriée est reçue, le protocole de transfert de fichiers est sélectionné en tant que protocole de communication.

4. Procédé selon la revendication 3, dans lequel, si une réponse appropriée n'est pas reçue, des identifications du dispositif (14) sont attendues pour être rassemblées en utilisant le protocole Bluetooth, et si une identification correspond à l'identification du noeud (12), le protocole Bluetooth est sélectionné en tant que protocole de communication.

5. Procédé selon la revendication 1, dans lequel, si le protocole de bloc de message de serveur ou le protocole Bluetooth est sélectionné en tant que protocole de communication, un nom d'utilisateur est automatiquement déterminé comme nom par défaut.

6. Procédé selon la revendication 1, comportant le transfert d'au moins un fichier non pas dans le format de système d'exploitation Palm entre une mémoire de système d'exploitation Palm interne (18) du dispositif (14) et le noeud (12) en bouclant le fichier dans le flux de système d'exploitation Palm dans la mémoire interne (18) et en effectuant au moins l'une d'une lecture ou d'une écriture sur le fichier.

7. Procédé selon la revendication 1, comportant le transfert d'au moins un fichier entre une mémoire de système d'exploitation Palm d'extension (20) du dispositif (14) et le noeud (12) par copie octet par octet du fichier en utilisant une table d'allocation de fichiers de la mémoire d'extension (20), le fichier étant transféré par l'intermédiaire d'une mémoire de système d'exploitation Palm interne (18) du dispositif (14).

8. Dispositif de système d'exploitation Palm (14), comportant :
au moins une mémoire interne (18) ;
au moins une mémoire d'extension (20) ;
au moins un système d'exploitation Palm (16) ayant accès aux mémoires (18, 20) ;
un moyen pour déterminer si un noeud (12) peut communiquer en utilisant un dialecte de bloc de message de serveur disponible dans le dispositif (14) ;
un moyen pour sélectionner le protocole de bloc de message de serveur en tant que protocole de communication si le protocole de bloc de message de serveur entre le dispositif (14) et le noeud (12) est possible ;
un moyen, si le noeud (12) ne peut pas communiquer en utilisant le protocole de bloc de message de serveur disponible dans le dispositif (14), pour interroger le noeud (12) grâce à un message de protocole de transfert de fichiers ;
un moyen, si une réponse appropriée est reçue, pour sélectionner le protocole de transfert de fichiers en tant que protocole de communication ;
un moyen, si une réponse appropriée n'est pas reçue, pour rassembler des identifications du dispositif (14) en utilisant le protocole Bluetooth ;
un moyen, si une identification correspond à une identification du noeud (12), pour sélectionner le protocole Bluetooth en tant que protocole de communication ; et
un moyen, si le protocole de transfert de fichiers ou le protocole Bluetooth est sélectionné en tant que protocole de communication, un partage de fichiers entre le dispositif (14) et le noeud (12) qui entraîne une lecture ou une écriture est exécuté en copiant temporairement un fichier du noeud (12) vers une mémoire du système d'exploitation Palm interne du dispositif (14), pour effectuer la lecture ou l'écriture sur le fichier, et ensuite en recopiant le fichier vers le noeud (12) pour écraser une version précédente du fichier dans le noeud (12).
